# NEW EUROPEAN PATENT SPECIFICATION

(11) **EP 2 538 146 B2**
(45) Date of publication and mention of the opposition decision: **29.05.2024**
(45) Mention of the grant of the patent: 20.04.2016
(21) Application number: 12173078.2
(22) Date of filing: 22.06.2012
(51) Int. Cl.: F24D 11/02, F24D 19/10, F24F 3/06, F24F 5/00, F24D 3/18, F24D 17/02

(54) **COLD/HOT WATER SUPPLY APPARATUS**
Warm-/Kaltwasserversorgungsvorrichtung
Appareil d'alimentation d'eau chaude/froide

(30) Priority: 24.06.2011 JP 2011140218
(43) Date of publication of application: 26.12.2012
(73) Proprietor: Panasonic Holdings Corporation, Osaka 571-8501 (JP)
(72) Inventor: ISAYAMA, Yasuhiko, Chuo-ku, OSAKA, 540-6207 (JP); AOYAMA, Shigeo, Chuo-ku, OSAKA, 540-6207 (JP)
(74) Representative: Eisenführ Speiser

(56) References cited:
- EP-A1- 2 103 883
- EP-A1- 2 103 883
- EP-A1- 2 395 302
- EP-A1- 2 395 302
- EP-A2- 1 113 233
- EP-A2- 1 113 233
- EP-A2- 2 204 620
- DE-A1- 3 038 579
- DE-A1- 3 038 579
- JP-A- S58 124 133
- JP-A- S58 124 133
- US-A- 5 628 200
- US-A- 5 628 200

## Description

### [Technical Field]

The present invention relates to a cold/hot water supply apparatus for carrying out air conditioning in an indoor space using a heat pump and for accumulating heat in a heat accumulator tank.

### [Background Technique]

There is a conventionally known cold/hot water supply apparatus having a cooling operation mode for cooling an indoor space and a heat-accumulation operation mode for heating a heat accumulator tank (see patent document 1 for example).

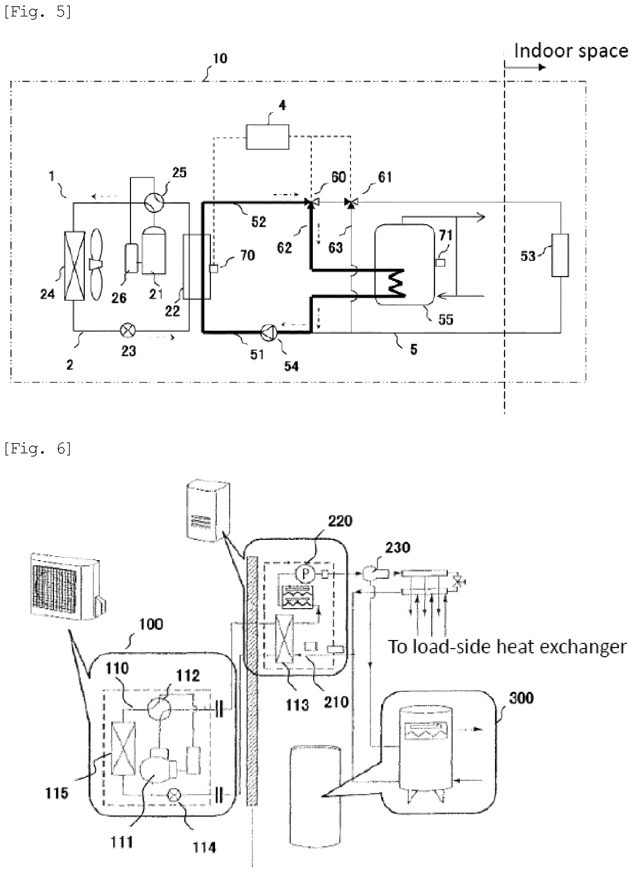

Fig. 6 shows a refrigeration cycle apparatus 100 which carries out an air conditioning operation in an indoor space and accumulates heat in a heat accumulator tank 300.

The refrigeration cycle apparatus 100 includes a refrigerant circuit 110 through which refrigerant circulates, a compressor 111, a four-way valve 112, a first heat exchanger 113, expansion means 114 and a air convection body heat exchanger 115, and these members are annularly connected to one another through pipes.

The first heat exchanger 113 includes a refrigerant circuit 110 and a fluid circuit 210. The fluid circuit 210 includes a first heat exchanger 113, circulation means 220 and a fluid path-switching valve 230. Fluid flowing through the fluid circuit 210 flows to a third heat exchanger 400 or a heat accumulator tank 300 by switching operation of the fluid path-switching valve 230. The third heat exchanger 400 is a fan coil unit having a heat exchanger and a blast fan.

In the case of the cooling operation mode, low temperature fluid is produced in the first heat exchanger 113. This low temperature fluid flows to the third heat exchanger 400 through the fluid path-switching valve 230, absorbs heat from the indoor space by the third heat exchanger 400, cools the indoor space and then, returns into the first heat exchanger 113.

In the case of the heat-accumulation operation mode, the refrigeration cycle apparatus 100 switches the four-way valve 112. According to this, the refrigerant flows in a direction opposite from that of the cooling operation mode. Therefore, in the case of the heat-accumulation operation mode, high temperature fluid is produced in the first heat exchanger 113. This high temperature fluid flows to the heat accumulator tank 300 through the fluid path-switching valve 230, dissipates heat in the heat accumulator tank 300 and then, returns to the first heat exchanger 113. Hot water heated in the heat accumulator tank 300 is supplied.

The cooling operation mode is switched to the heat-accumulation operation mode and the heat-accumulation operation mode is switched to the cooling operation mode by switching the fluid path-switching valve 230.

The low temperature fluid and the high temperature fluid produced by the first heat exchanger 113 are conveyed by switching the fluid path-switching valve 230.

That is, by switching the fluid path-switching valve 230, fluid which flows out of the first heat exchanger 113 cools an indoor space in the case of the cooling operation mode, and heats water in the heat accumulator tank 300 in the case of the heat-accumulation operation mode.

### [Prior Art Document]

### [Patent Document]

[Patent Document 1] Specification of EPC Patent Application Publication No. 2204620

EP2103883A1 discloses a cold/hot water supply apparatus according to the preamble of claim 1, comprising: a fluid circuit, a pump circulating fluid in the fluid circuit, a flow switch connected to the fluid circuit for detecting the flow condition of the circulated fluid, and a control configured to based on the flow condition alternatively conclude on the operability of the installation and the flow switch. Further, the present invention also relates to a method for alternatively monitoring the operability of the flow switch and the installation.

### [Summary of the Intention]

### [Problem to be Solved by the Invention]

According to the conventional configuration, however, when the cooling operation mode is switched to the heat-accumulation operation mode, low temperature fluid accumulated between the first heat exchanger 113 and the fluid path-switching valve 230 flows into the heat accumulator tank 300.

As a result, since the low temperature fluid absorbs heat from the heat accumulator tank 300, the heat accumulator tank 300 is cooled and a temperature thereof is lowered immediately after the operation mode is switched to the heat-accumulation operation mode. Since the heat accumulator tank 300 whose temperature is lowered is heated by the heat pump, it takes time to heat the heat accumulator tank 300, and energy utilizing efficiency is deteriorated.

The present invention has been accomplished to solve the conventional problem, and it is an object of the invention to provide a cold/hot water supply apparatus capable of shortening heating time of a heat accumulator tank when the cooling operation mode is switched to the heat-accumulation operation mode, and capable of enhancing energy efficiency.

### [Means for Solving the Problem]

To solve the conventional problem, the present invention provides a cold/hot water supply apparatus comprising all features of claim 1.

According to this configuration, when a temperature of the fluid is low immediately after the cooling operation mode is switched to the heat-accumulation operation mode, the fluid does not flow to the heat accumulator tank, the fluid is circulated through the first heat exchanger and is heated and a temperature of the fluid rises, and a temperature decrease of the heat accumulator tank which is caused by low temperature fluid can be reduced.

When a temperature of fluid is high immediately after the cooling operation mode is switched to the heat-accumulation operation mode, the high temperature fluid can heat the heat accumulator tank, and heat can be accumulated efficiently.

### [Effect of the Invention]

According to the present invention, when the cooling operation mode is switched to the heat-accumulation operation mode, it is possible to shorten the heating time of the heat accumulator tank, and to enhance the energy efficiency.

### [Brief Description of the Drawings]

Fig. 1 is a schematic explanatory diagram (cooling operation mode) of a fluid circuit of a cold/hot water supply apparatus according to a first embodiment of the present invention;
Fig. 2 is a schematic explanatory diagram (when cooling operation mode is switched to heat-accumulation operation mode) of the fluid circuit of the cold/hot water supply apparatus;
Fig. 3 is a schematic explanatory diagram (heat-accumulation operation mode) of the fluid circuit of the cold/hot water supply apparatus;
Fig. 4 is a flowchart of a driving operation of the cold/hot water supply apparatus;
Fig. 5 is a schematic explanatory diagram of a fluid circuit of a cold/hot water supply apparatus according to a second embodiment of the invention; and
Fig. 6 is a schematic block diagram of a conventional cold/hot water supply apparatus.

### [Explanation of Symbols]

- 2: refrigerant circuit
- 4: control apparatus
- 5: fluid circuit
- 10: cold/hot water supply apparatus
- 21: compressor
- 22: first heat exchanger
- 23: expansion means
- 24: second heat exchanger
- 53: third heat exchanger
- 54: circulation means
- 55: heat accumulator tank
- 60: first fluid path-switching valve
- 61: second fluid path-switching valve
- 62: first switching pipe
- 63: second switching pipe
- 70: temperature sensor
- 71: heat accumulator tank temperature sensor

### [Mode for Carrying Out the Invention]

According to the invention, the cold/hot water supply apparatus also includes: a temperature sensor which detects temperature of the fluid; and a second switching pipe which is connected to the third heat exchanger in parallel and which is connected to the first switching pipe in parallel, the fluid flowing through the second switching pipe; and when the cooling operation mode is changed to the heat-accumulation operation mode, the control apparatus determines whether the fluid which flows out of the first heat exchanger should be made to flow to the second switching pipe or to the first switching pipe based on temperature of the fluid detected by the temperature sensor.

According to this configuration, when the cooling operation mode is switched to the heat-accumulation operation mode, it is possible to select whether fluid should be made to flow to the second switching pipe or to the first switching pipe based on temperature. When the temperature of the fluid is low, the fluid does not flow to the heat accumulator tank and is circulated through the first heat exchanger, the fluid is heated, the temperature thereof rises, and it is possible to reduce the temperature decrease of the heat accumulator tank by the low temperature fluid.

When the temperature of the fluid is high immediately after the cooling operation mode is switched to the heat-accumulation operation mode, the high temperature fluid can heat the heat accumulator tank, and heat can efficiently be accumulated.

According to another aspect, in the cold/hot water supply apparatus of the invention, when the cooling operation mode is changed to the heat-accumulation operation mode, if temperature of the fluid detected by the temperature sensor is lower than the predetermined temperature, the control apparatus determines to flow, to the second switching pipe, the fluid which flows out from the first heat exchanger.

According to this, when the cooling operation mode is switched to the heat-accumulation operation mode, if the temperature of the fluid is low, the fluid does not flow to the heat accumulator tank and is circulated through the first heat exchanger, the fluid is heated, the temperature of the fluid rises, and it is possible to reduce the temperature decrease of the heat accumulator tank caused by the low temperature fluid.

According to another aspect, in the cold/hot water supply apparatus of the invention, when the cooling operation mode is changed to the heat-accumulation operation mode, if temperature of the fluid detected by the temperature sensor is equal to or higher than predetermined temperature, the control apparatus determines to flow, to the first switching pipe, the fluid which flows out from the first heat exchanger.

According to this, when the cooling operation mode is switched to the heat-accumulation operation mode, if the temperature of the fluid is high, the high temperature fluid can heat the heat accumulator tank, and heat can efficiently be accumulated.

According to another aspect, the cold/hot water supply apparatus of the invention further includes a heat accumulator tank temperature sensor which detects a temperature of the heat accumulator tank, and the control means determines the predetermined temperature based on a temperature detected by the heat accumulator tank temperature sensor.

According to this configuration, when the temperature of the heat accumulator tank is low, since the predetermined temperature also becomes low, it is possible to switch the heat-accumulation standby operation to the heat-accumulation operation at an early stage.

As a result, since it is possible to shorten the heat-accumulation standby time, and energy efficiency can be enhanced.

Embodiments of the present invention will be described with reference to the drawings. The invention is not limited to the embodiments.

### (First Embodiment)

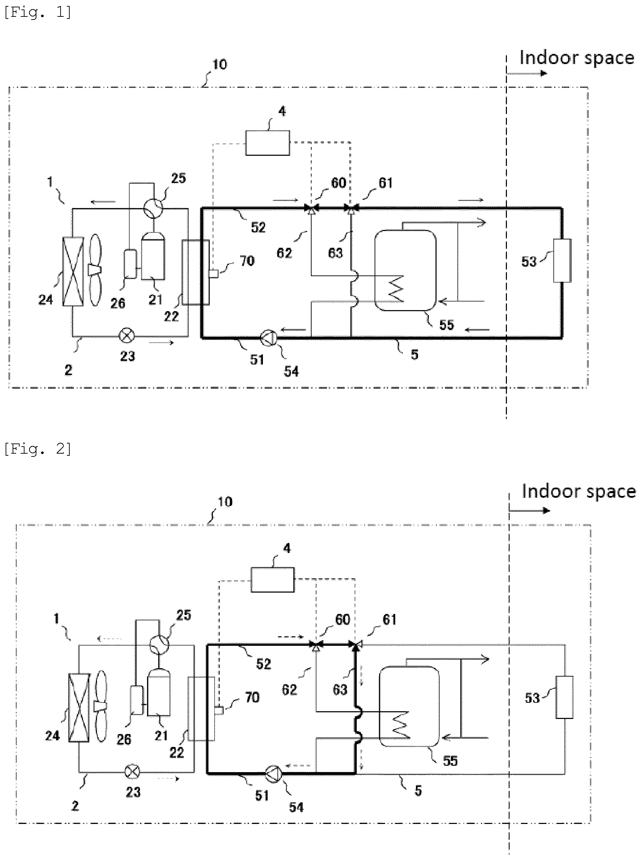

A cold/hot water supply apparatus according to a first embodiment of the present invention will be described using Figs. 1 to 4.

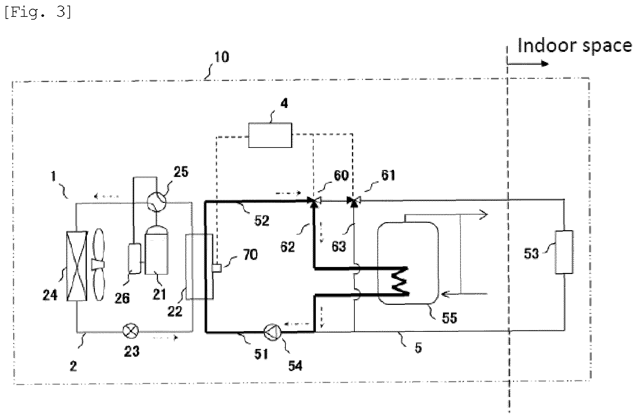

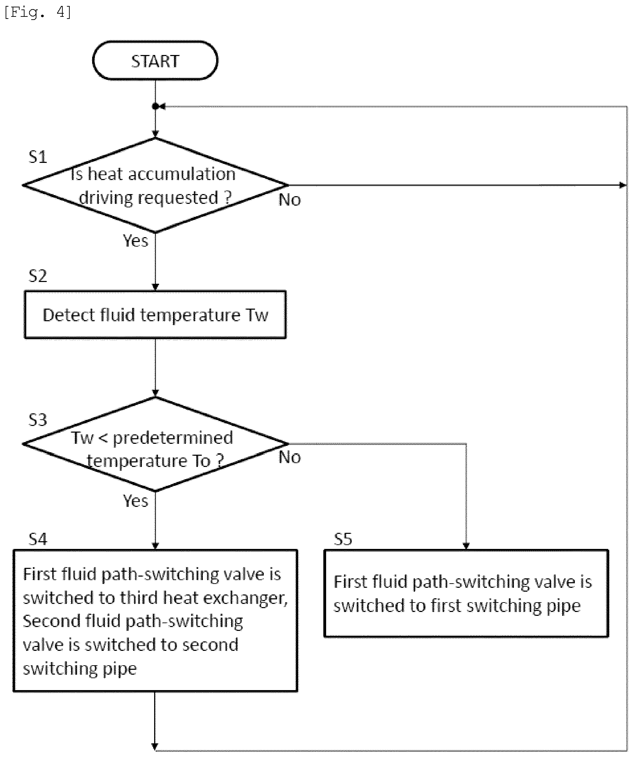

Figs. 1 to 3 are schematic block diagrams of the cold/hot water supply apparatus of the embodiment. Fig. 1 is a schematic block diagram showing a flow of fluid in a cooling operation mode, Fig. 2 is a schematic block diagram showing a flow of fluid when the cooling operation mode is switched to a heat-accumulation operation mode, Fig. 3 is a schematic block diagram showing a flow of fluid in the heat-accumulation operation mode, and Fig. 4 is a flowchart of a driving operation of the cold/hot water supply apparatus of the embodiment.

A configuration of the cold/hot water supply apparatus of the embodiment will be described using Fig. 1.

The cold/hot water supply apparatus 10 includes a refrigeration cycle apparatus 1, a fluid circuit 5, a third heat exchanger 53 and a heat accumulator tank 55.

The refrigeration cycle apparatus 1 includes a refrigerant circuit 2 through which refrigerant circulates. As the refrigerant, it is possible to use pseudo-azeotropic mixture refrigerant such as R410A and single refrigerant such as R32.

The refrigerant circuit 2 includes a compressor 21, a first heat exchanger 22, an expansion means 23 and a second heat exchanger 24 and these members are annularly connected to one another through pipes. The first heat exchanger 22 exchanges heat between refrigerant and fluid. An expansion valve or a capillary tube is used as the expansion means 23. The second heat exchanger 24 exchanges heat between refrigerant and air.

In this embodiment, an accumulator 26 which separates gas and liquid from each other is provided in an inflow side pipe of the compressor 21. In the heat-accumulation operation mode, the heat accumulator tank 55 is heated. In the cooling operation mode, the third heat exchanger 53 absorbs heat. The refrigerant circuit 2 is provided with a four-way valve 25 which switches between the heat-accumulation operation mode and the cooling operation mode.

In this embodiment, the refrigeration cycle apparatus 1 configures a low temperature water producing apparatus. This low temperature water producing apparatus utilizes low temperature fluid produced by the first heat exchanger 22 for absorbing heat by the third heat exchanger 53, and utilizes high temperature fluid produced by the first heat exchanger 22 for heating the heat accumulator tank 55. The first heat exchanger 22 exchanges heat between refrigerant and fluid.

The fluid circuit 5 includes the first heat exchanger 22 and the third heat exchanger 53, and these exchangers are annularly connected to each other through pipes. Fluid flows through the fluid circuit 5. The fluid is water or antifreeze. The third heat exchanger 53 is disposed in an indoor space, and cools and heats the indoor space.

An inflow pipe 51 is a pipe extending from the third heat exchanger 53 to the first heat exchanger 22, and an outflow pipe 52 is a pipe extending from the first heat exchanger 22 to the third heat exchanger 53.

The outflow pipe 52 is provided with a first fluid path-switching valve 60 and a second fluid path-switching valve 61. The inflow pipe 51 is provided with circulation means 54.

A first switching pipe 62 branches off from the first fluid path-switching valve 60 and is connected to the inflow pipe 51 through the heat accumulator tank 55. That is, the first switching pipe 62 is connected to the third heat exchanger 53 in parallel, and exchanges heat between fluid and water in the heat accumulator tank 55. The first switching pipe 62 and the inflow pipe 51 are connected to each other at a location upstream of the circulation means 54.

A second switching pipe 63 branches off from the second fluid path-switching valve 61 and is connected to the inflow pipe 51. That is, the second switching pipe 63 is connected to the third heat exchanger 53 in parallel, and connected to the first switching pipe 62 in parallel, and fluid flows therethrough. The second switching pipe 63 and the inflow pipe 51 are connected to each other at a location upstream of the circulation means 54.

A temperature sensor 70 which detects fluid temperature is disposed on the first heat exchanger 22.

A control apparatus 4 inputs a signal from the temperature sensor 70, and controls the first fluid path-switching valve 60 and the second fluid path-switching valve 61.

The cold/hot water supply apparatus 10 has the heat-accumulation operation mode, the cooling operation mode and a heating operation mode. In the heat-accumulation operation mode, water in the heat accumulator tank 55 is heated by flowing fluid into the first switching pipe 62. In the cooling operation mode, heat in air is absorbed by flowing fluid into the third heat exchanger 53. In the heating operation mode, heat is dissipated to air by flowing fluid into the third heat exchanger 53.

When the cooling operation mode is changed to the heat-accumulation operation mode, the control apparatus 4 determines whether fluid which flows out of the first heat exchanger 22 should be made to flow to the second switching valve 63 or the first switching valve 62 based on the temperature of fluid detected by the temperature sensor 70. If temperature of fluid detected by the temperature sensor 70 is lower than predetermined temperature, fluid which flows out of the first heat exchanger 22 is made to flow to the second switching pipe 63. If temperature of fluid detected by the temperature sensor 70 is equal to or higher than the predetermined temperature, the fluid which flows out of the first heat exchanger 22 is made to flow to the first switching valve 62.

Operation and effect of the cold/hot water supply apparatus having the above-described configuration will be described.

In the cooling operation mode, low temperature fluid produced by the first heat exchanger 22 absorbs heat in the third heat exchanger 53. Fig. 1 shows, with arrows, a flow direction of refrigerant and fluid in the cooling operation mode.

The first fluid path-switching valve 60 is switched by the control apparatus 4 such that fluid flows to the third heat exchanger 53.

High pressure gas refrigerant discharged from the compressor 21 flows into the second heat exchanger 24 through the four-way valve 25, and dissipates heat of condensation and condenses. High pressure liquid refrigerant cooled by the condensation flows out from the second heat exchanger 24.

High pressure liquid refrigerant which flows out of the second heat exchanger 24 is decompressed and expanded by the expansion means 23 and then, the refrigerant flows into the first heat exchanger 22. Low pressure air-liquid two-phase refrigerant which flows into the first heat exchanger 22 absorbs vaporization heat from the fluid and evaporates, and becomes low pressure two-phase refrigerant or overheated refrigerant and flows out of the first heat exchanger 22.

The low pressure refrigerant which flows out of the first heat exchanger 22 passes through the four-way valve 25, gas and liquid are separated from each other by the accumulator 26, and gas-phase refrigerant is sucked into the compressor 21.

Fluid cooled by the first heat exchanger 22 flows through the outflow pipe 52, and flows into the third heat exchanger 53 disposed in an indoor space through the first fluid path-switching valve 60 and the second fluid path-switching valve 61. The fluid absorbs heat from the third heat exchanger 53, flows into the inflow pipe 51 through the circulation means 54, and flows into the first heat exchanger 22 and is circulated.

The control device 4 controls to switch the first fluid path-switching valve 60 to the first switching pipe 62 or the third heat exchanger 53, and controls to switch the second fluid path-switching valve 61 to the second switching pipe 63 or the third heat exchanger 53.

Fig. 2 shows, with arrows, a flow direction of fluid when the cooling operation mode is switched to the heat-accumulation operation mode.

When the cooling operation mode is switched to the heat-accumulation operation mode in which fluid heats the heat accumulator tank 55, if a fluid temperature Tw detected by the temperature sensor 70 is lower than a predetermined temperature To, the control device 4 controls to switch the first fluid path-switching valve 60 to the third heat exchanger 53 and switch the second fluid path-switching valve 61 from the third heat exchanger 53 to the second switching pipe 63.

A high pressure refrigerant discharged from the compressor 21 flows into the first heat exchanger 22 through the four-way valve 25, and heats fluid which flows through the first heat exchanger 22. The fluid is water or antifreeze.

High pressure liquid refrigerant which flows out of the first heat exchanger 22 is decompressed and expanded by the expansion means 23 and then flows into the second heat exchanger 24. The low pressure two-phase refrigerant which flows into the second heat exchanger 24 absorbs vaporization heat from air and evaporates, and becomes low pressure two-phase refrigerant or overheated refrigerant, and flows out of the second heat exchanger 24.

The low pressure refrigerant which flows out of the second heat exchanger 24 passes through the four-way valve 25 and gas and liquid are separated from each other by the accumulator 26 and then, the gas-phase refrigerant is sucked into the compressor 21.

High temperature fluid is produced in the first heat exchanger 22 by the above-described operation.

The high temperature fluid produced in the first heat exchanger 22 flows through the outflow pipe 52 and flows into the second switching pipe 63 through the first fluid path-switching valve 60 and the second fluid path-switching valve 61. The fluid flows into the inflow pipe 51 through the circulation means 54 and flows into the first heat exchanger 22, and the fluid is circulated.

Fig. 3 shows, with arrows, a flow direction of fluid in the heat-accumulation operation mode.

When the fluid temperature Tw detected by the temperature sensor 70 disposed in the first heat exchanger 22 is equal to or higher than the predetermined temperature To, the first fluid path-switching valve 60 is switched from the third heat exchanger 53 to the first switching pipe 62.

Here, as an environment where the heat accumulator tank 55 is installed, since the temperature is set to about 20 degrees Celsius in many cases, the predetermined temperature To is set to 20 degrees Celsius in this embodiment also.

Operation and effect of the cold/hot water supply apparatus having the above-described configuration will be described below.

Control operation in the case of a heat-accumulation operation and a cooling operation will be described in detail using a flowchart in Fig. 4.

The control apparatus 4 controls the first fluid path-switching valve 60 and the second fluid path-switching valve 61 based on temperature detected by the temperature sensor 70.

First, the control apparatus 4 determines whether heat accumulation driving is requested (step 1). If the heat accumulation driving is not requested, the current state is maintained, and if the heat accumulation driving is requested, the the temperature sensor 70 in the first heat exchanger 22 detects the fluid temperature Tw (step 2), and compares the fluid temperature Tw and the predetermined temperature To with each other (step 3).

When the fluid temperature Tw is lower than the predetermined temperature To, it is determined that low temperature fluid flows through the first switching pipe 62 to absorb heat from the heat accumulator tank 55, and that the possibility that the heat accumulator tank 55 is cooled is high, and then the first fluid path-switching valve 60 is switched to the third heat exchanger 53, and the second fluid path-switching valve 61 is switched from the third heat exchanger 53 to the second switching pipe 63 (step 4).

When the fluid temperature Tw is equal to or higher than the predetermined temperature To, it is determined that the low temperature fluid flows through the first switching pipe 62 to absorb heat from the heat accumulator tank 55, and that the possibility that the heat accumulator tank 55 is cooled is low, and then the first fluid path-switching valve 60 is switched from the third heat exchanger 53 to the first switching pipe 62 (step 5). The control apparatus 4 continues the current state until the heat accumulation driving is requested (step 1).

As described above, in this embodiment, when the cooling operation mode is switched to the heat-accumulation operation mode, if the fluid temperature Tw detected by the temperature sensor 70 is lower than the predetermined temperature To, the first fluid path-switching valve 60 is switched to the third heat exchanger 53, and the second fluid path-switching valve 61 is switched from the third heat exchanger 53 to the second switching pipe 63.

According to this operation, the low temperature fluid is circulated through the first heat exchanger 22, the first fluid path-switching valve 60, the second fluid path-switching valve 61, the second switching pipe 63 and the circulation means 54 immediately after the cooling operation mode is switched to the heat-accumulation operation mode, the fluid is heated by the first heat exchanger 22 and a temperature of the fluid rises.

As a result, immediately after the cooling operation mode is switched to the heat-accumulation operation mode, the low temperature fluid does not flow to the heat accumulator tank 55, and temperature decrease of the heat accumulator tank 55 can be reduced.

When the cooling operation mode is switched to the heat-accumulation operation mode, if the fluid temperature Tw detected by the temperature sensor 70 is equal to or higher than the predetermined temperature To, the first fluid path-switching valve 60 is switched from the third heat exchanger 53 to the first switching pipe 62.

According to this operation, the fluid heated by the first heat exchanger 22 heats the heat accumulator tank 55.

As a result, the low temperature fluid in the fluid circuit 5 does not cool the heat accumulator tank 55, and the heating time of the heat accumulator tank 55 can be shortened.

### (Second Embodiment)

Fig. 5 shows a cold/hot water supply apparatus according to a second embodiment of the present invention. In the second embodiment, the same constituent parts as those of the first embodiment are designated with the same symbols, and explanation thereof will be omitted.

The basic configuration of the second embodiment is the same as that of the first embodiment, but a heat accumulator tank temperature sensor 71 is provided. That is, the heat accumulator tank temperature sensor 71 is provided to set the predetermined temperature To of the first embodiment.

Since the heat accumulator tank temperature sensor 71 is provided, the predetermined temperature To is set to a value which is equal to a detection temperature Tt of the heat accumulator tank temperature sensor 71 installed in the heat accumulator tank 55. The predetermined temperature To can be set lower or higher than the detection temperature Tt of the heat accumulator tank temperature sensor 71 by several degrees.

In this case, since the predetermined temperature To is set based on the temperature of the heat accumulator tank 55, the predetermined temperature To becomes low when the temperature of the heat accumulator tank 55 is low as compared with a case where the predetermined temperature To shown in the first embodiment is 20 degrees Celsius, and when the predetermined temperature To becomes equal to or about the detection temperature Tt of the heat accumulator tank temperature sensor 71, the first fluid path-switching valve 60 is switched from the third heat exchanger 53 to the first switching pipe 62. Therefore, the operation mode can be switched from a heat-accumulation standby operation to the heat-accumulation operation mode at an early stage as compared with the first embodiment (step 5 in Fig. 4).

As a result, since heat-accumulation standby time can be shortened, the energy efficiency can be enhanced.

In Figs. 1 to 3 and 5, a branch point from the fluid circuit 5 to the second switching pipe 63 is located between the first fluid path-switching valve 60 and the third heat exchanger 53, but it may be located between the first heat exchanger 22 and the first fluid path-switching valve 60.

### [Industrial Applicability]

According to the cold/hot water supply apparatus of the present invention, when the cooling operation mode is switched to the heat-accumulation operation mode, if the fluid temperature is equal to or higher than the predetermined temperature, the first fluid path-switching valve 60 is switched. According to this, since fluid having temperature which is equal to or higher than the predetermined temperature flows into the heat accumulator tank, the temperature decrease of the heat accumulator tank when the operation mode is the heat-accumulation operation mode can be reduced, the present invention can be applied also to a cold/hot water supply apparatus which heats fluid and utilizes the fluid for heating an indoor space.

## Claims

1. A cold/hot water supply apparatus (10) comprising: a refrigerant circuit (2) including a compressor (21), a first heat exchanger (22), expansion means (23) and a second heat exchanger (24) which are annularly connected to one another and through which refrigerant flows;
a fluid circuit (5) including the first heat exchanger (22) and a third heat exchanger (53) which are annularly connected to each other and through which fluid flows;
a heat accumulator tank (55) in which water is stored;
a first switching pipe (62) which is connected to the third heat exchanger (53) in parallel, and which exchanges heat between the fluid and water in the heat accumulator tank (55); and
a control apparatus (4) which is configured to switch between a flow of the fluid to the third heat exchanger (53) and a flow of the fluid to the heat accumulator tank (55); in which
the cold/hot water supply apparatus (10) has a heat-accumulation operation mode and a cooling operation mode, in the heat-accumulation operation mode, the fluid flows to the first switching pipe (62), thereby heating the water in the heat accumulator tank (55), and in the cooling operation mode, the fluid flows to the third heat exchanger (53), thereby absorbing heat in air, wherein
the cold/hot water supply apparatus (10) also includes: a temperature sensor (70) which detects temperature of the fluid; and
**characterized by**
a second switching pipe (63) which is connected to the third heat exchanger (53) in parallel and which is connected to the first switching pipe (62) in parallel, the fluid flowing through the second switching pipe (63);
the first switching pipe (62) branching off from a first fluid path-switching valve (60) and being connected to a pipe extending from the third heat exchanger (53) to the first heat exchanger (22) through the heat accumulator tank (55),
the second switching pipe (63) branching off from a second fluid path-switching valve (61) and being connected to the pipe extending from the third heat exchanger (53) to the first heat exchanger (22);
the control apparatus (4) being configured to control the first fluid path-switching valve (60) and the second fluid path-switching valve (61) based on the temperature; and
when the cooling operation mode is changed to the heat-accumulation operation mode, the control apparatus (4) is configured to determine whether the fluid which flows out of the first heat exchanger (22) should be made to flow to the second switching pipe (63) or to the first switching pipe (62) based on temperature of the fluid detected by the temperature sensor (70).

2. The cold/hot water supply apparatus (10) according to claim 1, wherein the control apparatus (4) is configured to receive a signal from the temperature sensor (70) and further configured to control the flow of the fluid which flows out of the first heat exchanger (22) based on the signal from the temperature sensor (70), such that when the cooling operation mode is changed to the heat-accumulation operation mode, if temperature of the fluid detected by the temperature sensor (70) is lower than predetermined temperature, the control apparatus (4) determines to flow, to the second switching pipe (63), the fluid which flows from the first heat exchanger (22).

3. The cold/hot water supply apparatus (10) according to claim 1, wherein the control apparatus (4) is configured to receive a signal from the temperature sensor (70) and further configured to control the flow of the fluid which flows out of the first heat exchanger (22) based on the signal from the temperature sensor (70), such that when the cooling operation mode is changed to the heat-accumulation operation mode, if temperature of the fluid detected by the temperature sensor (70) is equal to or higher than predetermined temperature, the control apparatus (4) determines to flow, to the first switching pipe (62), the fluid which flows from the first heat exchanger (22).

4. The cold/hot water supply apparatus (10) according to claim 2 or 3, further comprising a heat accumulator tank temperature sensor (71) which detects a temperature of the heat accumulator tank (55), wherein a control means determines the predetermined temperature based on a temperature detected by the heat accumulator tank temperature sensor (71).

## Patentansprüche

1. Kalt-/Warmwasserversorgungsvorrichtung (10), umfassend: einen Kältemittelkreislauf (2), der einen Verdichter (21), einen ersten Wärmetauscher (22), Expansionsmittel (23) und einen zweiten Wärmetauscher (24) umfasst, die ringförmig miteinander verbunden sind und durch die ein Kältemittel fließt;
einen Fluidkreislauf (5), der den ersten Wärmetauscher (22) und einen dritten Wärmetauscher (53) umfasst, die ringförmig miteinander verbunden sind und durch die ein Fluid fließt;
einen Wärmespeichertank (55), in dem Wasser gespeichert ist;
ein erstes Umschaltrohr (62), das parallel mit dem dritten Wärmetauscher (53) verbunden ist und das Wärme zwischen dem Fluid und Wasser in dem Wärmespeichertank (55) austauscht; und
eine Steuervorrichtung (4), die dazu eingerichtet ist, zwischen einem Strom des Fluids zu dem dritten Wärmetauscher (53) und einem Strom des Fluids zu dem Wärmespeichertank (55) umzuschalten; wobei
die Kalt-/Warmwasserversorgungsvorrichtung (10) einen Wärmespeicherungsbetriebsmodus und einen Kühlbetriebsmodus aufweist, das Fluid im Wärmespeicherungsbetriebsmodus zu dem ersten Umschaltrohr (62) fließt, wodurch es das Wasser in dem Wärmespeichertank (55) erwärmt, und das Fluid im Kühlbetriebsmodus zu dem dritten Wärmetauscher (53) fließt, wodurch es Wärme in der Luft aufnimmt, wobei
die Kalt-/Warmwasserversorgungsvorrichtung (10) außerdem umfasst: einen Temperatursensor (70), der eine Temperatur des Fluids detektiert; und
**gekennzeichnet durch**
ein zweites Umschaltrohr (63), das parallel mit dem dritten Wärmetauscher (53) verbunden ist und das parallel mit dem ersten Umschaltrohr (62) verbunden ist, wobei das Fluid durch das zweite Umschaltrohr (63) fließt;
wobei das erste Umschaltrohr (62) von einem ersten Fluidwegumschaltventil (60) abzweigt und mit einem Rohr verbunden ist, das durch den Wärmespeichertank (55) von dem dritten Wärmetauscher (53) zu dem ersten Wärmetauscher (22) verläuft,
wobei das zweite Umschaltrohr (63) von einem zweiten Fluidwegumschaltventil (61) abzweigt und mit dem Rohr verbunden ist, das von dem dritten Wärmetauscher (53) zu dem ersten Wärmetauscher (22) verläuft;
wobei die Steuervorrichtung (4) dazu eingerichtet ist, das erste Fluidwegumschaltventil (60) und das zweite Fluidwegumschaltventil (61) auf der Grundlage der Temperatur zu steuern; und
wobei die Steuervorrichtung (4), wenn der Kühlbetriebsmodus in den Wärmespeicherungsbetriebsmodus geändert wird, dazu eingerichtet ist, auf der Grundlage einer vom Temperatursensor (70) detektierten Temperatur des Fluids zu bestimmen, ob das Fluid, das aus dem ersten Wärmetauscher (22) ausströmt, zu dem zweiten Umschaltrohr (63) oder zu dem ersten Umschaltrohr (62) fließen gelassen werden soll.

2. Kalt-/Warmwasserversorgungsvorrichtung (10) nach Anspruch 1, wobei die Steuervorrichtung (4) dazu eingerichtet ist, ein Signal von dem Temperatursensor (70) zu empfangen, und ferner dazu eingerichtet ist, den Strom des Fluids, das aus dem ersten Wärmetauscher (22) ausströmt, auf der Grundlage des Signals von dem Temperatursensor (70) derart zu steuern, dass die Steuervorrichtung (4), wenn der Kühlbetriebsmodus in den Wärmespeicherungsbetriebsmodus geändert wird, bestimmt, falls eine von dem Temperatursensor (70) detektierte Temperatur des Fluids niedriger als eine vorgegebene Temperatur ist, dass das aus dem ersten Wärmetauscher (22) ausströmende Fluid zu dem zweiten Umschaltrohr (63) strömen soll.

3. Kalt-/Warmwasserversorgungsvorrichtung (10) nach Anspruch 1, wobei die Steuervorrichtung (4) dazu eingerichtet ist, ein Signal von dem Temperatursensor (70) zu empfangen, und ferner dazu eingerichtet ist, den Strom des Fluids, das aus dem ersten Wärmetauscher (22) ausströmt, auf der Grundlage des Signals von dem Temperatursensor (70) derart zu steuern, dass die Steuervorrichtung (4), wenn der Kühlbetriebsmodus in den Wärmespeicherungsbetriebsmodus geändert wird, bestimmt, falls eine von dem Temperatursensor (70) detektierte Temperatur des Fluids gleich oder höher als eine vorgegebene Temperatur ist, dass das aus dem ersten Wärmetauscher (22) ausströmende Fluid zu dem ersten Umschaltrohr (62) strömen soll.

4. Kalt-/Warmwasserversorgungsvorrichtung (10) nach Anspruch 2 oder 3, ferner umfassend einen Wärmespeichertank-Temperatursensor (71), der eine Temperatur des Wärmespeichertanks (55) detektiert, wobei eine Steuereinrichtung die vorgegebene Temperatur auf der Grundlage einer Temperatur bestimmt, die von dem Wärmespeichertank-Temperatursensor (71) detektiert wird.

## Revendications

1. Appareil d'alimentation en eau froide/chaude (10) comprenant : un circuit à fluide frigorigène (2) comprenant un compresseur (21), un premier échangeur de chaleur (22), des moyens d'expansion (23) et un deuxième échangeur de chaleur (24) qui sont reliés de manière annulaire les uns aux autres et à travers lesquels s'écoule le fluide frigorigène ;
un circuit à fluide (5) comprenant le premier échangeur de chaleur (22) et un troisième échangeur de chaleur (53) qui sont reliés de manière annulaire l'un à l'autre et à travers lesquels s'écoule un fluide ;
un réservoir d'accumulateur de chaleur (55) dans lequel de l'eau est stockée ;
un premier tuyau de commutation (62) qui est relié au troisième échangeur de chaleur (53) en parallèle et qui échange de la chaleur entre le fluide et l'eau dans le réservoir d'accumulateur de chaleur (55) ; et
un appareil de commande (4) qui est conçu pour commuter entre un écoulement du fluide vers le troisième échangeur de chaleur (53) et un écoulement du fluide vers le réservoir d'accumulateur de chaleur (55) ; dans lequel
l'appareil d'alimentation en eau froide/chaude (10) présente un mode de fonctionnement d'accumulation de chaleur et un mode de fonctionnement de refroidissement, dans le mode de fonctionnement d'accumulation de chaleur, le fluide s'écoule vers le premier tuyau de commutation (62), permettant ainsi de chauffer l'eau dans le réservoir d'accumulateur de chaleur (55), et dans le mode de fonctionnement de refroidissement, le fluide s'écoule vers le troisième échangeur de chaleur (53), absorbant ainsi la chaleur dans l'air,
l'appareil d'alimentation en eau froide/chaude (10) comprenant également : un capteur de température (70) qui détecte la température du fluide ; et
**caractérisé par**
un second tuyau de commutation (63) qui est relié au troisième échangeur de chaleur (53) en parallèle et qui est relié au premier tuyau de commutation (62) en parallèle, le fluide s'écoulant à travers le second tuyau de commutation (63) ;
le premier tuyau de commutation (62) se ramifiant à partir d'une première vanne de commutation de trajet de fluide (60) et étant relié à un tuyau s'étendant à partir du troisième échangeur de chaleur (53) vers le premier échangeur de chaleur (22) à travers le réservoir d'accumulateur de chaleur (55),
le second tuyau de commutation (63) se ramifiant à partir d'une seconde vanne de commutation de trajet de fluide (61) et étant relié au tuyau s'étendant à partir du troisième échangeur de chaleur (53) vers le premier échangeur de chaleur (22) ;
l'appareil de commande (4) étant conçu pour commander la première vanne de commutation de trajet de fluide (60) et la seconde vanne de commutation de trajet de fluide (61) sur la base de la température ; et
lorsque le mode de fonctionnement de refroidissement est modifié en mode de fonctionnement d'accumulation de chaleur, l'appareil de commande (4) est conçu pour déterminer si le fluide qui s'écoule hors du premier échangeur de chaleur (22) doit être amené à s'écouler vers le second tuyau de commutation (63) ou vers le premier tuyau de commutation (62) sur la base de la température du fluide détectée par le capteur de température (70).

2. Appareil d'alimentation en eau froide/chaude (10) selon la revendication 1, l'appareil de commande (4) étant conçu pour recevoir un signal provenant du capteur de température (70) et conçu en outre pour commander l'écoulement du fluide qui s'écoule hors du premier échangeur de chaleur (22) sur la base du signal provenant du capteur de température (70), de telle sorte que, lorsque le mode de fonctionnement de refroidissement est modifié en mode de fonctionnement d'accumulation de chaleur, si la température du fluide détectée par le capteur de température (70) est inférieure à une température prédéterminée, l'appareil de commande (4) détermine que l'écoulement du fluide qui s'écoule à partir du premier échangeur de chaleur (22) doit se faire vers le second tuyau de commutation (63).

3. Appareil d'alimentation en eau froide/chaude (10) selon la revendication 1, l'appareil de commande (4) étant conçu pour recevoir un signal provenant du capteur de température (70) et conçu en outre pour commander l'écoulement du fluide qui s'écoule hors du premier échangeur de chaleur (22) sur la base du signal provenant du capteur de température (70), de telle sorte que, lorsque le mode de fonctionnement de refroidissement est modifié en mode de fonctionnement d'accumulation de chaleur, si la température du fluide détectée par le capteur de température (70) est égale ou supérieure à une température prédéterminée, l'appareil de commande (4) détermine que l'écoulement du fluide qui s'écoule à partir du premier échangeur de chaleur (22) doit se faire vers le premier tuyau de commutation (62).

4. Appareil d'alimentation en eau froide/chaude (10) selon la revendication 2 ou 3, comprenant en outre un capteur de température (71) de réservoir d'accumulateur de chaleur qui détecte une température du réservoir d'accumulateur de chaleur (55), un moyen de commande déterminant la température prédéterminée sur la base d'une température détectée par le capteur de température (71) de réservoir d'accumulateur de chaleur.
